# EUROPEAN PATENT APPLICATION

(11) **EP 3 321 316 A1**
(43) Date of publication of application: **16.05.2018**
(21) Application number: 16198508.0
(22) Date of filing: 11.11.2016
(51) Int. Cl.: C08L 1/02

(54) **DRYING OF NANOCELLULOSE USING AMMONIA IN A SUPERCRITICAL STATE**

(71) Applicant: SAPPI Netherlands Services B.V., 6211 AA Maastricht (NL)
(72) Inventor: JENNEKENS, Math, Simpelveld 6369 BZ (NL); TRAMBITAS, Daniela Oana, 2274 EB Voorburg (NL)
(74) Representative: Schmitz, Joseph

(57) **Abstract**

It is an object of the present invention to provide a process for producing non-surface modified nanocellulose particles, in particular in the form of a powder, comprising the steps of i. providing a suspension of never-dried, non-surface modified nanocellulose particles in an aqueous liquid, which aqueous liquid is non-solubilising for the non-surface modified nanocellulose particles, and which aqueous liquid is water or an aqueous solution of morpholine or piperidine or mixtures thereof, ii. contacting the suspension of non-surface modified nanocellulose particles with a fluid in a supercritical state, which fluid is miscible with the aqueous liquid and is non-solubilising for the non-surface modified nanocellulose particles, under conditions suitable for the transfer of the aqueous liquid into the fluid in a supercritical state, iii. removing the aqueous liquid and the fluid in a supercritical state, preferably by controlling pressure and/or temperature, to form the non-surface modified nanocellulose particles, iv. collecting the non-surface modified nanocellulose particles, characterized in that the fluid in a supercritical state comprises, or consists of, ammonia (NH3) in a supercritical state.

## Description

### TECHNICAL FIELD

The present invention relates to a process for producing dry, water-dispersible nanocellulose particles.

### PRIOR ART

Nanocellulose is a promising material which has recently benefited from increased scrutiny in the industry. Two main production processes exist for obtaining nanocellulose; the first is based on milling and fluidization in aqueous fluids, where nanocellulose is obtained from a process which is based on the traditional pulping process. This process usually results in a diluted aqueous dispersion containing a certain amount of nanocellulose in aqueous liquid. Dilute solutions often are not preferred in an industrial context, and thus evaporation of the liquid to produce a more convenient dry powder of nanocellulose is desirable. However, it has been found that upon evaporation of the aqueous liquid, in the obtained nanocellulose powder agglomerates are formed, and which cannot be re-dispersed in an aqueous liquid without considerable effort. The presence of these un-dispersible agglomerates in the nanocellulose powder thus obtained is thought to be the main reason for the loss of some of the desirable mechanical properties of the thus dried nanocellulose when the dried nanocellulose powder is rehydrated with water for further processing.

These disadvantages strongly impede the more widespread use of nanocellulose, since dilute dispersions cannot be transported in an acceptable manner and less-than optimal mechanical properties make the nanocellulose powders less attractive for example as reinforcing agent in polymers or as a rheology modifier. In fact, most nanocellulose which is nowadays freshly produced ad hoc and used in the form of a dispersion or a gel in an aqueous liquid, without ever having been dried and re-hydrated.

Therefore, it is highly desirable to provide a dry, convenient form of nanocellulose which can easily be stored and transported and re-dispersed in water or other aqueous liquids and which can be manufactured easily and cost effectively as well as in a continuous manner at an industrial scale, preferably using slightly modified pre-existing industrial infrastructure and that can be used preferably immediately downstream of existing the production processes of nanocellulose.

In addition, it is energetically favorable to swell cellulose feedstock before producing nanocellulose out of it. Swelling agents mediate a quick swelling and allow to reduce the energy required in the refining process, but can be a problem when the suspension of nanocellulose in a aqueous swelling liquid is subjected as-is to supercritical spray-drying because some supercritical fluids may chemically react with the swelling agents. While it is possible to exchange the aqueous swelling liquid for another, less reactive aqueous liquid, this however may complicate the entire process.

The publication "Improved Structural Data of Cellulose III_{I} Prepared in Supercritical Ammonia" discloses a process in which, cellulose allomorph samples that resulted from the treatment of cellulose I by liquid ammonia or by series of amines were prepared by subjecting oriented films consisting of an assembly of *Cladophora* cellulose microcrystals to supercritical ammonia. In this publication the cellulose fibers were dried after the exposure to the supercritical ammonia using methanol and vacuum at 50°C. However, this publication does not describe specifically a drying process involving supercritical ammonia spray drying of unmodified cellulose. Therefore, the process described is inherently unsuitable for the preparation of the desired powder of unmodified nanocellulose.

The publication "Effects of alkaline or liquid-ammonia treatment on crystalline cellulose: changes in crystalline structure and effects on enzymatic digestibility" revealed that the treatment with liquid ammonia produced the cellulose III_{I} allomorph; treatment conditions however, affects the cellulose crystallinity. Treatment at a low temperature (25°C) resulted in a less crystalline product, whereas treatment at elevated temperatures (130°C or 140°C) gave a more crystalline product. No reference is however made to the specific drying process and/or conditions after exposure to ammonia.

The communication "Supercritical ammonia pretreatment of lignocellulosic materials" describes briefly a pretreatment technique using ammonia in a supercritical or near-critical fluid state which substantially enhances the susceptibility of polysaccharides in lignocellulosics to subsequent hydrolysis by Trichoderma reesei cellulase. Near-theoretical conversion of cellulose and 70-80% conversion of hemicellulose to sugars from supercritical ammonia pretreated hardwoods or agricultural byproducts were obtained with a small dosage of cellulase. This technique was less effective toward softwoods. The pretreatment results are discussed in light of the properties of supercritical fluids but no drying processes of any kind of cellulosic materials have been described.

The Chinese patent CN105237642 (A) circumvents the problems of activating cellulose through supercritical fluid. The supercritical fluid environment contains non-polar supercritical fluid solvent and polar co-solvent, or the supercritical fluid environment contains polar supercritical fluid and optional polar co-solvent. The new method describes the advantages of avoided structure damages or degradation of cellulose. The crystallinity degree of cellulose is reduced and reactivity is improved in the activating process, in the chemical modification process.

### SUMMARY OF THE INVENTION

The present invention provides a process which allows obtaining a dried form of non-surface modified, nanocellulose particles which can be dispersed in an aqueous liquid such as water without significant loss of viscoelastic and gel-forming properties, when compared to freshly prepared, never-dried nanocellulose.

It is an object of the present invention to provide a process for producing non-surface modified nanocellulose particles, in particular in the form of a powder, comprising the steps of i. providing a suspension of never-dried, non-surface modified nanocellulose particles in an aqueous liquid, which aqueous liquid is non-solubilising for the non-surface modified nanocellulose particles, and which aqueous liquid is water or an aqueous solution of a swelling agent chosen from a chemical compound or enzymes, ii. contacting the suspension of non-surface modified nanocellulose particles with a fluid in a supercritical state, which fluid is miscible with the aqueous liquid and is non-solubilising for the non-surface modified nanocellulose particles, under conditions suitable for the transfer of the aqueous liquid into the fluid in a supercritical state, iii. removing the aqueous liquid and the fluid in a supercritical state, preferably by controlling pressure and/or temperature, to form the non-surface modified nanocellulose particles, iv. collecting the non-surface modified nanocellulose particles, characterized in that the fluid in a supercritical state comprises, or consists of, ammonia (NH₃) in a supercritical state.

It is an object of the present invention to provide a process for producing non-surface modified nanocellulose particles, in particular in the form of a powder, comprising the steps of i. providing a suspension of never-dried, non-surface modified nanocellulose particles in an aqueous liquid, which aqueous liquid is non-solubilising for the non-surface modified nanocellulose particles, and which aqueous liquid is water or an aqueous solution of morpholine or piperidine or mixtures thereof, ii. contacting the suspension of non-surface modified nanocellulose particles with a fluid in a supercritical state, which fluid is miscible with the aqueous liquid and is non-solubilising for the non-surface modified nanocellulose particles, under conditions suitable for the transfer of the aqueous liquid into the fluid in a supercritical state, iii. removing the aqueous liquid and the fluid in a supercritical state, preferably by controlling pressure and/or temperature, to form the non-surface modified nanocellulose particles, iv. collecting the non-surface modified nanocellulose particles, characterized in that the fluid in a supercritical state comprises, or consists of, ammonia (NH₃) in a supercritical state.

In an embodiment of the process for producing non-surface modified nanocellulose particles according to the present invention, the aqueous liquid is an aqueous solution of a cyclic secondary amine or mixtures thereof, and preferably is an aqueous solution of morpholine, piperidine, or mixtures thereof, more preferably an aqueous solution of morpholine, piperidine, or mixtures thereof, comprising of from 60 to 99% (by volume) of morpholine, piperidine, or mixtures thereof or of from 70 to 95% (by volume) of morpholine or piperidine, or mixtures thereof.

In an embodiment of the process for producing non-surface modified nanocellulose particles according to the present invention, the aqueous liquid is water.

In an embodiment of the process for producing non-surface modified nanocellulose particles according to the present invention, the suspension comprises up to 20 % (by weight), preferably of from 0.1 to 20 % (by weigth), more preferably of from 1 % (by weigth) to 10 % (by weight), of non-surface modified nanocellulose particles.

In a first alternative embodiment of the process for producing non-surface modified nanocellulose particles according to the present invention, in step ii., the suspension and the fluid in a supercritical state are contacted by contacting a flow of fluid in a supercritical state with a flow of suspension, either a. by simultaneously atomizing the flow of the suspension of non-surface modified nanocellulose particles and the flow of the fluid in a supercritical state separately through one or more, preferably concentric or coaxial, nozzles into a pressure- and/or temperature-controlled particle formation vessel, or b. by blending, swirling, vortexing or otherwise mixing the flow of the suspension and the flow of the fluid in a supercritical state to form a mixture and then atomizing said mixture across one or more nozzles, into a pressure- and/or temperature-controlled particle formation vessel.

In an embodiment of the process for producing non-surface modified nanocellulose particles according to the present invention, the mass ratio between the flow of suspension and the flow of fluid in a supercritical state is of from 1:1000 to 1:10, preferably of from 1:30 to 1:3.
In an embodiment of the process for producing non-surface modified nanocellulose particles according to the present invention, in the case of step ii. being as defined according to item a. of the above, the suspension is flown through the central jet of the concentric or coaxial nozzle and the fluid in a supercritical state is flown through the annular peripheral jet. In a preferred embodiment, said coaxial nozzle has a ratio D1/D2 of between 0.7-0.9, where D1 is the nozzle diameter of the central jet of the suspension and D2 is the nozzle diameter of the annular peripheral jet of the fluid in a supercritical state.

In a second alternative embodiment of the process for producing non-surface modified nanocellulose particles according to the present invention, in step ii., the suspension and the fluid in a supercritical state are contacted by first inserting the suspension and the fluid in a subcritical state into a pressure- and/or temperature-controlled particle formation vessel and subsequently adjusting pressure and/or temperature in the pressure- and/or temperature-controlled particle formation vessel such as to bring the fluid in a subcritical state into a supercritical state.

It is further an object of the present invention to provide non-derivatized nanocellulose particles, in particular in the form of a powder, obtainable by a process according to any of the above embodiment of the process for producing non-surface modified nanocellulose particles.

In an embodiment of the non-derivatized nanocellulose particles, the particles have a number average diameter in the range of 4 to 200 nm and a number average length in the range of 10 to 900 nm.

In an embodiment of the non-derivatized nanocellulose particles, the particles are dry.

### DESCRIPTION OF PREFERRED EMBODIMENTS

The term "nanocellulose" as used herein encompasses the (interchangeably used) terms "nanofibrillated cellulose" or "NFC" or "cellulose nanofibrils" or "CNF" and refers to cellulose particles which are characterized by having an elongated form, having an aspect ratio of >1 preferably of >5, and having a number average length in the range of 15-900 nm, preferably in the range of 50-700 nm, more preferably 70-700 nm. The number average thickness is preferably in the range of 3-200 nm, preferably in the range of 5-100 nm, more preferably in the range of 5-30 nm.

The term "dry" as used herein means essentially free of liquid, in particular water, under atmospheric conditions (1 atm., 25°C) with a water activity values in the range of 0.2 to 0.4 at 25°C and 1 bar.

As stated above, it is an object of the present invention to provide a process for producing non-surface modified nanocellulose particles comprising the steps of i. providing a suspension of never-dried, non-surface modified nanocellulose particles in an aqueous liquid, which aqueous liquid is non-solubilising for the non-surface modified nanocellulose particles, and which aqueous liquid is water or an aqueous solution of morpholine or piperidine or mixtures thereof, ii. contacting the suspension of non-surface modified nanocellulose particles with a fluid in a supercritical state, which fluid is miscible with the aqueous liquid and is non-solubilising for the non-surface modified nanocellulose particles, under conditions suitable for the transfer of the aqueous liquid into the fluid in a supercritical state, iii. removing the aqueous liquid and the fluid in a supercritical state, preferably by controlling pressure and/or temperature, to form the non-surface modified nanocellulose particles, iv. collecting the non-surface modified nanocellulose particles, characterized in that the fluid in a supercritical state comprises, or consists of, ammonia (NH3) in a supercritical state.

The suspension of non-surface modified nanocellulose particles in anaqueous liquid can be obtained by suspending non-surface modified cellulose particles in an aqueous liquid to form a suspension of non-surface modified cellulose particles in an aqueous liquid and refining said suspension until the non-surface modified cellulose particles of said suspension are broken down to non-surface modified nanocellulose particles.

The non-surface modified cellulose particles can be sourced primarily from wood pulp, other cellulosic biomass fibres and commercially available micro-crystalline cellulose, such as for example Avicel PH-101 from FMC Corporation. Wood pulp includes ground wood fibres, recycled or secondary wood pulp fibres, bleached and unbleached wood fibres. Both softwood and hardwood can be utilized for the wood pulp. In addition, suitable cellulosic biomass materials such as bagasse, flax, switchgrass, bamboo, cotton, hemp or sisal can be utilized for making pulp. Another exemplary wood pulp is bleached dissolving hardwood pulp (92α) pulp. Alternatively, it is also possible to source the non-surface modified cellulose particles from recycling streams such a paper or cardboard recycling streams or from post manufacturing waste streams, for example from paper or cardboard production.

While not essential, refining the non-surface modified cellulose particles of the suspension can be facilitated if the aqueous liquid is a mixture of water and one or more chemical components capable of acting as swelling agents that weaken the inter-crystalline bonds of the cellulose but without weakening the intra-crystalline bonds of the cellulose. In this case, the non-surface modified cellulose particles are preferably left to swell in the aqueous liquid comprising a mixture of water and one or more swelling agents for a predetermined time, for example from 1, 6 or 24 hours or any intermediate amount of time, and optionally under agitation. It is however preferred to refine the non-surface modified cellulose particles in a suspension in which the aqueous liquid comprises a cellulose swelling agent, since energy consumption of the refining process can be thereby reduced. The swelling agent may be an enzyme, chemical compound or an organic solvent. It is a further advantage of the present invention that the suspension of non-surface modified nanocellulose particles in an aqueous liquid comprising a cellulose swelling agent can be used as-is in the process according to the present invention, since the ammonia in a supercritical state does not interact with cellulose swelling agents, in particular when cellulose swelling agents are chosen from cyclic secondary amines or mixtures thereof.

Thus, in general in the process for producing non-surface modified nanocellulose particles according to the invention, step i. can be preceded by a step of pre-treating non-surface modified cellulose particles with one or more chemical compounds such as organic solvents or enzymes, and preferably by swelling non-surface modified cellulose particles in a suspension of aqueous liquid comprising a swelling agent such as cyclic secondary amines or mixtures thereof, or in a suspension of aqueous liquid comprising one or more enzymes, and then comminuting the non-surface modified cellulose particles of such a suspension until a suspension of non-surface modified cellulose particles in the respective aqueous liquid is formed.

Thus, in order to provide a suspension of non-surface modified cellulose particles, the non-surface modified cellulose particles suspended in the aqueous liquid can be subjected to mechanical comminution using conventional technologies known in the art, imparting high shear forces, such as microfluidization, (e.g. a M110-EH Microfluidizer Processor fitted with two chambers in series), high pressure homogenization (e.g. a NanoDeBee high pressure homogenizer (BEE International Inc), a ConCor high pressure/high shear homogenizer (Primary Dispersions Ltd)), or imoparting high friction forces (e.g. a Super MassColloider colloid/friction mill (Masuko)), and/or combinations thereof.

As already stated above, the energy consumption may be reduced by using an aqueous liquid that includes a swelling agent and preferably allowing the cellulose particles to swell in the aqueous liquid for a time.During the mechanical comminution of the suspension of non-surface modified cellulose particles, the cellulose particles are broken down into the desired non-surface modified nanocellulose particles and the suspension of non-surface modified nanocellulose particles in a first aqueous liquid is formed.

Alternatively, in order to provide a suspension of non-surface modified cellulose particles, the, suspensions of non-surface modified nanocellulose particles in an aqueous liquid can be obtained commercially.

The aqueous liquid, including swelling agents that might be included, must be non-solubilising for the non-surface modified nanocellulose particles, so that the cellulose particles are not dissolved in the first liquid and a suspension of undissolved nanocellulose particles can be formed. The full dissolution of the cellulose would result in the destruction of the crystalline regions of the cellulose particles, which regions are thought to be responsible for the outstanding mechanical properties of cellulose nanofibers (CNF) and nanocrystalline cellulose (NCC).

The aqueous liquid may be water or may be a mixture of water and one or more chemical compounds such as organic solvents or enzymes.

In the case where the aqueous liquid is an aqueous solution of one or more chemical compounds such as organic solvents, the chemical compounds chosen preferably such that they are at least partially soluble in water, and are more preferably are miscible with water. The chemical compounds such as organic solvents are preferably capable of acting as cellulose swelling agents. The aqueous liquid is preferably an aqueous solution of one or more swelling agents such as morpholine, piperidine or mixtures of both, and more preferably is a an aqueous solution of morpholine, piperidine or both comprising of from 60 to 99% (by volume) of morpholine, piperidine or both, or of from 70 to 95% (by volume) of morpholine or piperidine or both. Morpholine and piperidine are miscible with water.

In the case where the aqueous liquid is an aqueous solution of enzymes, the person skilled in the art will know how to adjust the amount of the enzyme to produce the amount of enzymatic activity required for arriving at non-surface modified nanocellulose particles after refining. Examples of such enzymes are cellulases, pectinases, xylanases and ligninases.

The suspension of non-surface modified nanocellulose particles in anaqueous liquid may have a cellulose content of up to 20 % (by weight), preferably of from 0.1 to 20 % (by weigth), more preferably of from 1 % (by weigth) to 10 % (by weight), of non-surface modified nanocellulose particles.

To achieve the transfer of the aqueous liquid into the fluid in a supercritical, it necessary that the fluid in a supercritical state be miscible with the aqueous liquid and be non-solvating for the non-surface modified nanocellulose particles.

The miscibility of the aqueous liquid in the fluid in a supercritical state allows the aqueous liquid to transfer from the suspension into the fluid in a supercritical whereas its non-solvating property for the non-surface modified nanocellulose particles prevents the disruption of the native supramolecular structure within the non-surface modified nanocellulose particles.

To achieve the transfer of essentially all of the aqueous liquid into the fluid in a supercritical state, it is further necessary that the amount of fluid in a supercritical state that is contacted with the aqueous liquid is sufficiently large for the aqueous liquid to be essentially entirely removed from the suspension. The exact weight/flow ratio between the fluid in a supercritical state and the suspension can depend on the chemical nature of the aqueous liquid used as well as the content of nanocellulose particles. As a general rule however, a given amount of parts by weight of suspension is contacted with a larger amount of parts by weight of fluid in a supercritical state. For instance, in the case where the fluid in a supercritical state comprises about 98 to 100 weight percent of anhydrous ammonia, or is anhydrous ammonia, and the suspension is a suspension having of 0.1 to 10 weight percent of non-surface modified nanocellulose particles and the aqueous liquid comprises a secondary cyclic amines and is for example an aqueous solution of morpholine, piperidine or both comprising of from 60 to 99% (by volume) of morpholine, piperidine or both, 1 part by weight of suspension is contacted with 10 to 1000 parts by weight of fluid in a supercritical state and preferably 1 part by weight of suspension is contacted with 3 to 30 parts by weight of fluid in a supercritical state.

In step ii. of the process according to the invention, the suspension of non-surface modified nanocellulose particles is contacted with a fluid in a supercritical state, which fluid is miscible with the aqueous liquid and is non-solubilising for the non-surface modified nanocellulose particles, under conditions suitable for the transfer of the aqueous liquid into the fluid in a supercritical state. During this step, the aqueous liquid is taken up in the fluid in a supercritical state and washed away until essentially all of the aqueous liquid was taken up in the fluid in supercritical state. An advantage of ammonia in a supercritical state is that it can take up water, as well as cellulose swelling agents belonging to the group of cyclic secondary amines or mixtures thereof such as morpholine and piperidine, or enzymes. It is understood that within the present invention, the suspension of non-surface modified nanocellulose particles can be contacted with a fluid in a supercritical state either batch-wise or in a continuous manner. It is further understood that the person skilled in the art will be able to determine the pressure and/or temperature conditions to provide for an efficient transfer of aqueous liquid into the fluid in supercritical state as well as to bring the fluid into a supercritical state.

As a general rule, when using ammonia as fluid in a supercritical state, a suitable pressure should be selected in the range of about 10 to about 300 bar, preferably in the range of about 150 to 200 bar, preferably in the range of about 112 to 150 bar, whereas the suitable temperature should be selected in the range of about 0 to about 200°C, more preferably in the range of about 10 to about 1500 °C such as for example 30°C, 60°C, 80°C, or 100°C, more preferably in the range of about 80 to about 140 °C.

By controlling temperature and pressure, most substances that are gaseous at ambient conditions can be set into a state which is different from the common solid, liquid and gas states. In this state, known as the supercritical state, the substances become effective and selective fluid solvents, also called supercritical fluids. A fluid in a supercritical state is defined as a fluid above its critical temperature T_{c} and critical pressure P_{c}, which parameters together define the critical point in the phase diagram. The critical point represents the highest temperature and pressure at which the substance can exist as a vapour and liquid in equilibrium. The near-critical region can be defined as a region below the critical pressure and/or temperature. Within the near- critical region, some fluids can exist in a state of two phases, with different densities for the vapour and the liquid phase. Even below their critical pressure, i.e. at near-critical conditions, certain compressed gases may attain solvent and penetration properties, which are highly useful in extraction, precipitation, and drying processes.

The fluid in a supercritical state can be chosen from a fluid comprising ammonia or from anhydrous ammonia. For the avoidance of doubt, the term "ammonia" refers to an aqueous solution of NH3. For instance, an aqueous solution of ammonia having a content of preferably 95 wt% or more, more preferably of 98 wt% or more of ammonia is suitable for the purposes of the process according to the invention. Most preferably, the fluid in a supercritical state is anhydrous ammonia, i.e. pure NH₃. While some of the above mentioned fluids are gaseous at ambient conditions (e.g. at 25°C and 1 atm.), and thus can be driven off easily by simply venting the particle formation vessel, some are liquid at ambient conditions (e.g. are 25 °C and 1 atm.) and require decanting and/or heating to be removed from the particle formation vessel. It is understood that the heating shall be within a range where the nanocellulose particles do not become thermally degraded.

The flow of the suspension of non-surface modified nanocellulose particles can be contacted with the flow of a fluid in a supercritical state by simultaneously atomizing a flow of the suspension of non-surface modified nanocellulose particles and a flow of the fluid in a supercritical state separately through one or more, preferably concentric or coaxial, nozzles into a pressure- and/or temperature-controlled particle formation vessel, in which the pressure and pressure are controlled and adjusted such that the fluid in a supercritical remains in the supercritical state. Thus, both the flow of the suspension of non-surface modified nanocellulose particles and flow of the fluid in supercritical state are atomized into the particle formation vessel separately, i.e. both flows contact only upon entering a particle formation vessel through the one or more nozzles.

Useful nozzles for atomising the fluid in a supercritical state and the suspension of non-surface modified nanocellulose particles are generally known to the skilled person in the field. They include, for example, rotating disk nozzles, impinging jet nozzles, capillary nozzles, single orifice nozzles, ultrasonic nozzles of vibrating or pulsating type, two-fluid nozzles such as concentric or coaxial two-fluid nozzles etc. Preferably, the nozzles are preferably concentric or coaxial two-fluid nozzles.

In an alternative embodiment, the process can be accomplished also by passing a fluid in a supercritical state through a body containing the suspension. The entire process may work batch-wise or continuous if the supercritical fluid is contacted with the suspension in a co-or counter flow of an autoclave system.

The flow of the first suspension of non-surface modified nanocellulose particles can be contacted with the flow of a fluid in a supercritical state by blending, swirling, vortexing or otherwise mixing the suspension and the flow of the fluid in a supercritical state to form a mixture and then atomizing said mixture across one or more nozzles into a pressure- and/or temperature-controlled particle formation vessel, in which the pressure and pressure are adjusted such that the fluid in a supercritical state remains in the supercritical or critical state. Thus, the suspension of non-surface modified nanocellulose particles is combined with fluid into a mixture already before being atomized into particle formation vessel.

The one or more nozzles leading into the particle formation vessel and may be arranged in different ways, such as for example such that the jets exiting from the one or more nozzles and into the particle formation vessel result in the formation of a vortex or turbulence within the particle formation vessel in order to enhance the transfer of the aqueous liquid towards the fluid in a supercritical state.

In step iii. of the process according to the invention, the aqueous liquid and the fluid in a supercritical state are then removed, preferably by controlling pressure and/or temperature, to form the non-surface modified nanocellulose particles.

Once essentially all of the aqueous liquid is transferred into the supercritical fluid within the particle formation vessel, the mixture of fluid in a supercritical state and of aqueous liquid is removed in order to form non-surface modified nanocellulose particles that are in powder form as well as essentially free from aqueous liquid. They can easily be re-dispersed in an aqueous solvent such as water in order to yield e.g. a gel having in essence the same rheological properties as a gel obtained from never-dried nanocellulose.

Removal of the mixture of fluid in a supercritical state and aqueous liquid may preferably be achieved by controlling pressure and/or temperature, such as for example venting or evacuating the particle formation vessel, while optionally heating the vessel at the same time when required. Optionally, the vessel may be purged several times with another gas to remove any residual mixture of aqueous liquid and fluid, or repeatedly heated to drive off residual first aqueous liquid or fluid.

In step iv. of the process according to the invention, the non-surface modified nanocellulose particles are collected.
Once the removal of the mixture of fluid in a sub-, supercritical or critical state and first aqueous liquid is completed, dry, water-dispersible nanocellulose particles are formed, and which are subsequently isolated from the particle formation vessel.

The particle formation vessel can be any vessel for which the temperature and pressure may be controlled, and which comprises of an opening from which the non-surface modified nanocellulose particles can be removed in order to collect the dry, water-dispersible, non-surface modified nanocellulose particles.

It is another object of the present invention to provide non-derivatized nanocellulose particles obtainable by a process according to any of the above.

The non-derivatized nanocellulose particles obtainable by a process according to any of the above have an average diameter in the range of 4 to 200 nm and an average length in the range of 10 to 900 nm.

The non-derivatized nanocellulose particles can be in powder form and are preferably essentially free of the aqueous liquid used for the suspension, i.e. dry. This means that the particles can be easily handled, transported and metered in contrast to liquid suspensions of never-dried nanocellulose.

The non-derivatized nanocellulose particles can be re-dispersed in water to yield a suspension of non-derivatized nanocellulose particles that is similar to the suspension of never-died non-surface modified nanocellulose particles in terms of rheological properties, as will be shown below. The rheological parameters such as viscosity show about 70%, 75%, 80 and to about 85% recovery following re-dispersion.

### EXAMPLES

A beaker holding 20 ml suspension of 4.7 g non-derivatized nanocellulose particles in an aqueous solution of morpholine was placed in a particle formation volume connected by a valve to a larger reservoir system having an internal volume of about 170 ml. The reservoir system was filled with anhydrous ammonia at 10 bar and then hermetically closed and placed in an temperature-controlled oven. The system was then heated to 130-140 °C and the pressure inside the system increased to 150-200 bar, which corresponds to supercritical conditions in the case of ammonia.

Upon reaching supercritical conditions, the valve connecting the reservoir system and the particle formation volume was slowly opened and the supercritical ammonia flowed from the reservoir system into the particle formation volume where the suspension sample is placed. Both water and morpholine were dissolved into the supercritical ammonia stream and thereby removed from the particle formation volume. The mixture of water, morpholine and ammonia was captured in an exhaust pipe immersed into a water bath. The flow was kept low (on average 1mL/min). When no Ammonia was captured anymore into the water tank, the experiment was stopped and vessels were slowly depressurized. The resulting non-derivatized nanocellulose particulate recovered from the beaker was white in appearance and had a fluffy morphology.

## Claims

1. A process for producing non-surface modified nanocellulose particles comprising the steps of:
i. providing a suspension of never-dried, non-surface modified nanocellulose particles in an aqueous liquid, which aqueous liquid is non-solubilising for the non-surface modified nanocellulose particles, and which aqueous liquid is water or an aqueous solution of morpholine or piperidine or mixtures thereof,
ii. contacting the suspension of non-surface modified nanocellulose particles with a fluid in a supercritical state, which fluid is miscible with the aqueous liquid and is non-solubilising for the non-surface modified nanocellulose particles, under conditions suitable for the transfer of the aqueous liquid into the fluid in a supercritical state,
iii. removing the aqueous liquid and the fluid in a supercritical state, preferably by controlling pressure and/or temperature, to form the non-surface modified nanocellulose particles,
iv. collecting the non-surface modified nanocellulose particles,
**characterized in that**
the fluid in a supercritical state comprises, or consists of, ammonia (NH₃) in a supercritical state.

2. The process according to claim 1, wherein the aqueous liquid is an aqueous solution of a cyclic secondary amine or mixtures thereof, and preferably is an aqueous solution of morpholine, piperidine, or mixtures thereof, more preferably an aqueous solution of morpholine, piperidine, or mixtures thereof, comprising of from 60 to 99% (by volume) of morpholine, piperidine, or mixtures thereof or of from 70 to 95% (by volume) of morpholine or piperidine, or mixtures thereof.

3. The process according to claim 1, wherein the first aqueous liquid is water.

4. The process according to any preceding claim, wherein the suspension comprises up to 20 % (by weight), preferably of from 0.1 to 20 % (by weigth), more preferably of from 1 % (by weigth) to 10 % (by weight), of non-surface modified nanocellulose particles.

5. The process according to any of claims 1 to 4, wherein in step ii., the suspension and the fluid in a supercritical state are contacted by contacting a flow of fluid in a supercritical state with a flow of suspension, either
a. by simultaneously atomizing the flow of the suspension of non-surface modified nanocellulose particles and the flow of the fluid in a supercritical state separately through one or more, preferably concentric or coaxial, nozzles into a pressure- and/or temperature-controlled particle formation vessel, or
b. by blending, swirling, vortexing or otherwise mixing the flow of the t suspension and the flow of the fluid in a supercritical state to form a mixture and then atomizing said mixture across one or more nozzles, into a pressure-and/or temperature-controlled particle formation vessel.

6. The process according to claim 5, wherein the flow of mass ratio between the flow of suspension and the flow of fluid in a supercritical state is of from 1:1000 to 1:10, preferably of from 1:30 to 1:3.

7. The process according to claim 5 or 6, in the case of step ii. being as defined according to item a. of claim 5, the suspension is flown through the central jet of the concentric or coaxial nozzle and the fluid in a supercritical state is flown through the annular peripheral jet.

8. The process according to any of claims 1 to 4, wherein in step ii., the suspension and the fluid in a supercritical state are contacted by first inserting the suspension and the fluid in a subcritical state into a pressure- and/or temperature-controlled particle formation vessel and subsequently adjusting pressure and/or temperature in the pressure- and/or temperature-controlled particle formation vessel such as to bring the fluid in a subcritical state into a supercritical state.

9. Non-derivatized nanocellulose particles obtainable by a process according to any of the above claims.

10. Non-derivatized nanocellulose particles obtainable by a process according to any of the claims 1 to 8, wherein the particles have an average diameter in the range of 4 to 200 nm and an average length in the range of 10 to 900 nm.
